# EUROPEAN PATENT APPLICATION

(11) **EP 0 635 418 A1**
(43) Date of publication of application: **25.01.1995**
(21) Application number: 94110819.3
(22) Date of filing: 12.07.1994
(51) Int. Cl.: B62D 33/04, B62D 29/04, B62D 25/20

(54) **A container of plastics material which is attached to an industrial vehicle chassis**

(30) Priority: 20.07.1993 IT TO930173 U
(71) Applicant: VEICAR S.r.l., I-12030 Casalgrasso (IT)
(72) Inventor: Pirolina, Antonio, I-12037 Saluzzo (IT)
(74) Representative: Jorio, Paolo

(57) **Abstract**

A container (6) of plastics material in which a bottom (7) defining the floor of the container (6) itself has at least one pair of integral external projections (11), also formed of plastics material, which project from the bottom (7) to bear against a portion of the chassis (2) of an associated vehicle (1); the projections (11) having respective transverse holes (17) for engagement by the screws (16) of a system (13) adapted to enable the container (6) to be fixed to the chassis (2) of the vehicle (1).

## Description

The present invention relates to a container of plastics material which can be attached to a commercial vehicle chassis.

The present invention may be applied to advantage, but not exclusively, in the field of commercial vehicles adapted for the transport of goods such as meat, frozen foods and the like and therefore equipped with an insulated and refrigerated container or compartment, to which the following description will refer explicitly without thereby limiting its overall scope.

Prior art containers for the transport of goods of the aforesaid type are normally made of glass-reinforced plastics and include a substantially flat floor or platform which supports the remaining portion of the container and is intended to be fixed to the longitudinal members of the chassis of an associated commercial vehicle.

In order to space this floor from the vehicle wheels, an additional profiled section is interposed between the floor and each of the longitudinal members, this section normally being C-shaped and made of metal and generally fixed to the floor by means of a plurality of through-screws and to the longitudinal members preferably by welding or, alternatively by means of bolts.

However, the use of the aforesaid C-sections to space the floor of the container from the wheels of the associated commercial vehicle involves some disadvantages.

First of all, as these C-sections are made of metal they are relatively heavy, obviously adding to the weight on the vehicle chassis and to the overall empty weight of the vehicle itself.

In addition, the prior mounting of the profiled sections on the vehicle chassis and the subsequent fixing of the container to the sections involves relatively high assembly costs, to which must be added the manufacturing and maintenance costs of the sections themselves. Finally, the fixing of the floor to the sections by means of through-screws compromises the thermal insulation of the container as apertures are made in the floor itself which put the load space defined by the container into communication with the outside.

The object of the present invention is to provide a container of plastics material for commercial vehicles which overcomes the problems described above both simply and economically and also proves highly reliable in operation.

According to the present invention, there is provided a container of plastics material which can be attached to a commercial vehicle chassis, this container including a bottom defining the floor of the container itself and being characterised in that it also includes at least one pair of external projections carried by the bottom and formed of plastics material; these projections projecting from the bottom and being adapted to bear against a portion of the vehicle chassis, fixing means being provided for fixing each of the projections to this chassis.

In the container defined above, the projections are preferably formed in one piece with the bottom and are conveniently mutually parallel and transversely spaced.

The invention will now be described with reference to the appended drawings, which illustrate one non-limitative embodiment, in which:
Figure 1 is a perspective view of a preferred embodiment of the container of the invention shown mounted on a commercial vehicle;
Figure 2 is a sectioned perspective view of a detail of Figure 1, with parts removed for clarity;
Figure 3 shows a detail of Figure 2, enlarged and sectioned;
Figure 4 is a drawing similar to Figure 3, illustrating a variant of a detail of Figure 3;
Figure 5 is a drawing similar to Figure 2, illustrating a variant of a detail of Figure 2, and
Figure 6 shows a detail of Figure 5, enlarged and sectioned.

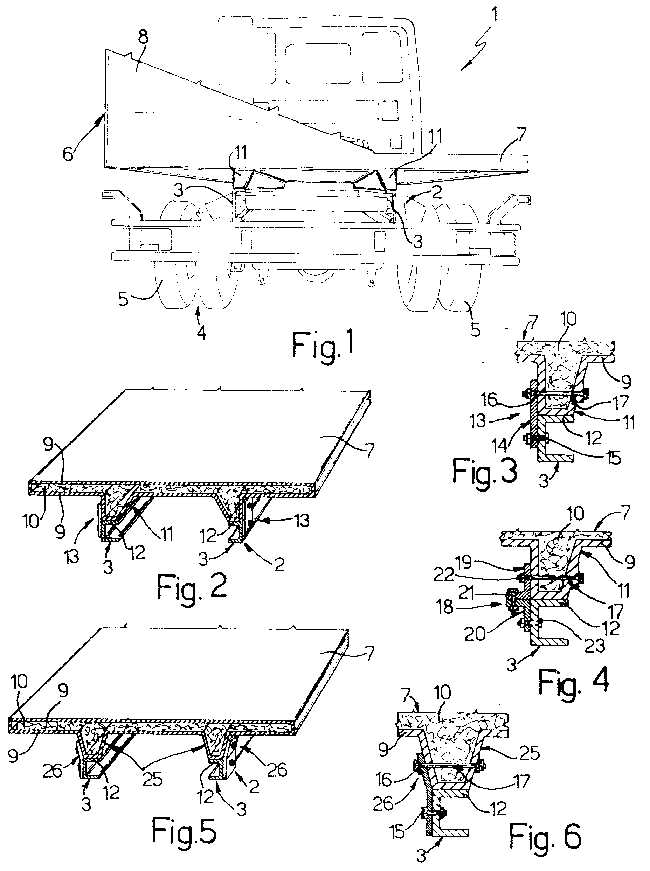

In Figure 1, a commercial vehicle is generally indicated 1 and includes a chassis 2 with a pair of parallel C-section longitudinal members 3 and a rear axle 4 fixed in known manner to the chassis 2 and having a plurality of wheels 5.

The vehicle 1 also includes a container or van compartment 6 which defines a load space and, in the embodiment illustrated, is insulated and refrigerated in known manner and is made entirely of plastics material, in particular of glass-reinforced plastics. The container 6 is supported by the chassis 2 and includes a flat bottom 7 adapted to define the floor of the container 6 itself and a partly illustrated side wall 8 which is formed by a plurality of panels fixed to each other by known means.

In the embodiment illustrated, the bottom 7 is formed by two parallel, outer layers 9 of glass-reinforced plastics spaced apart by an intermediate layer 10 of polyurethane foam and has two straight longitudinal projections 11 which extend on the outside of the container 6 in parallel, transversely spaced positions and are each formed to bear against a respective longitudinal member 3.

In particular, each of the projections 11 is formed in glass-reinforced plastics, substantially in the same way as and in one piece with the bottom 7 and projects towards the longitudinal members 3 by a distance greater than the thickness of the bottom 7.

As shown in Figures 2 and 3, each of the projections 11 is a right-angled trapezium in cross-section, having its larger base integral with the bottom 7 and a width which may vary in dependence on the capacity of the container 6 and on the loading capacity of the vehicle 1 but is in any case greater than the thickness of the bottom 7 itself. The shorter base of each of the projections 11 extends in contact with a flange 12 of an associated longitudinal member 3 and has a width comparable to the thickness of the bottom 7 but also variable in dependence on the capacity of the vehicle.

The container 6 is securely fixed to the longitudinal members 3 of the vehicle 1 by means of a releasable fixing system 13 comprising, for each projection 11, a plurality of plates 14 (Figure 3) distributed along the respective projection 11 itself. In particular, each plate 14 has a first portion securely fixed to the web of the respective longitudinal member 3 by means of a screw 15 and a second portion which extends in contact with a perpendicular side of the respective projection 11 and is fixed to this projection 11 by means of a plurality of screws 16 which engage respective through-holes 17 which extend through the projection 11 parallel to the bottom 7.

Alternatively, as shown in Figure 4, the container 6 is fixed to the longitudinal members 3 by means of a system 18 comprising a plurality of pairs of L-shaped brackets 19 and 20 also distributed along the length of respective projections 11. In particular, the brackets 19 and 20 of each pair of brackets have respective first limbs securely fixed to each other by a screw 21 and respective second limbs which project in opposite directions from the first limbs. The second limbs are fixed respectively to the associated projection 11 by means of a through screw 22 engaged in a respective hole 17 therein parallel to the bottom 7 and to the web of the associated longitudinal member 3 by means of a screw 23.

In the embodiment illustrated in Figure 5, the container 6 includes, instead of the projections 11, two other projections 25 which differ from the projections 11 only in that their cross-section is an isosceles trapezium. In this case, the shorter base of a projection 25 still bears on the flange 12 of an associated longitudinal member 3 and the container 6 is fixed to the longitudinal members 3 by means of a system 26 which is similar to the fixing system 13, differing from it only in that the aforesaid two portions of each plate 14 are at a predetermined acute angle to each other.

It is clear from the above that in addition to spacing the wall 7 from the wheels 5, both the projections 11 and the projections 25 also considerably reduce the empty weight of the vehicle 1 as they are made of plastics material, in particular of glass-reinforced plastics, and are therefore relatively light.

In addition, as the projections 11 and 25 are integral with the bottom 7 of the container 6, operations for mounting this container 6 on the chassis 2 are made considerably simpler and faster, it being possible, in particular, to fix the container without making any holes in the bottom 7, thereby improving the thermal insulation of the container 6.

Finally, it is possible to form a chassis-container unit with the container 6 as described which is characterised by having a simpler construction than known units and by having lower assembly costs than these units.

It is also clear from the above that modifications and variations may be made to the container 6 as described without departing from the protective scope of the present invention. In particular, the number, geometry and arrangement of the projections 11 and 25 may be varied and devices may be provided for fixing the projections 11 and 25 to the chassis 2 which differ from those described by way of example.

Finally, the projections 11 and 25 could be carried by containers which, while still made of plastics material and in particular of glass-reinforced plastics, are different from the container 6 described by way of example. In particular, the projections 11 and 25 may be provided on bodies of various shapes, intended, for example, for transporting loose goods.

## Claims

1. A container (6) of plastics material which can be attached to a chassis (2) of a commercial vehicle (1), the container (6) including a bottom (7) defining the floor of the container (6) itself and being characterised in that it also includes at least one pair of external projections (11; 25) carried by the bottom (7) and made of plastics material; these projections (11; 25) projecting from the bottom (7) and being adapted to bear against a portion of the chassis (2) of the vehicle (1), means (13; 18; 26) being provided for fixing each of the projections (11; 25) to the chassis (2).

2. A container according to Claim 1, characterised in that the projections (11; 25) are made in one piece with the bottom (7).

3. A container according to either Claim 1 or Claim 2, characterised in that the projections (11; 25) extend in parallel, transversely spaced positions.

4. A container according to any one of the preceding Claims, characterised in that the projections (11; 25) are straight projections arranged in parallel, transversely spaced positions so as each to cooperate in use with a respective longitudinal member (3) of the vehicle (1).

5. A container according to any one of the preceding Claims, characterised in that each of the projections (11) is a right-angled trapezium in cross-section.

6. A container according to any one of Claims 1 to 4, characterised in that each of the projections (25) is an isosceles trapezium in cross-section.

7. A container according to any one of the preceding Claims, characterised in that the fixing means (13; 26) include a plurality of plate attachment elements (14) distributed along the respective projections (11; 25) and each including a first portion adapted to be securely fixed to the chassis (2) and a second portion arranged to bear against the respective projection (11; 25); the fixing means (13; 26) also including a plurality of screws (22) for fixing the second portions to their respective projections (11; 25), these screws (22) engaging respective holes (17) passing transversely through the projections (11; 25) themselves.

8. A container according to any one of Claims 1 to 5, characterised in that the fixing means (18) include a plurality of pairs of first and second L-shaped brackets (19 and 20); the brackets (19) (20) of each pair of brackets having respective first limbs securely fixed to each other, respective second limbs being securely fixed to the projections (11) by means of a plurality of screws (22) extending through respective holes (17) formed transversely in the projections (11) themselves.

9. A container according to any one of the preceding Claims, characterised in that at least the bottom (7) and the projections (11; 25) are made of glass-reinforced plastics.

10. A commercial vehicle (1) including a chassis (2) and a container (6) of plastics material coupled to this chassis (2), characterised in that the container (6) is made according to any one of the preceding Claims.
